# EUROPEAN PATENT SPECIFICATION

(11) **EP 1 916 125 B1**
(45) Date of publication and mention of the grant of the patent: **22.07.2009**
(21) Application number: 07020808.7
(22) Date of filing: 24.10.2007
(51) Int. Cl.: B60C 25/138

(54) **Operating head for a tyre-removal machine and associated tyre-removal machine**
Betriebskopf für eine Reifenentfernungsmaschine und entsprechende Reifenentfernungsmaschine
Tête de fonctionnement pour démonte-pneu et machine de démonte-pneu associée

(30) Priority: 27.10.2006 IT MI20062076
(43) Date of publication of application: 30.04.2008
(73) Proprietor: C.M.L. s.n.c. di Marco Galbiati & C., 20035 Lissone (MI) (IT)
(72) Inventor: Galbiati, Marco, 20035 Lissone MI (IT)
(74) Representative: Colombo, Stefano Paolo

(56) References cited:
- EP-A- 0 987 130
- EP-A- 1 625 954
- EP-A2- 0 947 360
- EP-A2- 1 026 017
- DE-A1- 4 415 064

## Description

The present invention relates to an operating head for a so-called tyre-removal machine which is designed to remove a tyre from its rim and mount a tyre on a rim. The present invention also relates to a tyre-removal machine which is fitted with this operating head.

Various tyre-removal machines which are able to remove a tyre from a rim and mount a tyre on a rim are known. During the course of the present description and the claims, the term "tyre-removal machine" (or also simply "tyre remover") will be understood as meaning a machine which is able to perform both tyre removal and tyre mounting operations on the wheel of a vehicle.

The removal and mounting of a wheel tyre generally requires a series of operations. For example, in order to remove a wheel tyre it is required firstly to separate the beads from the edge of the rim (bead separation). Then one of the two beads is engaged and extracted from the edge of the rim (bead engagement). Finally, the tyre is removed from the rim by pushing the tyre on the opposite side to the extracted bead (tyre removal).

EP1,625,954 discloses a tyre-removal machine comprising a single multi-function tool. According to EP 1,625,954 a bead-engaging member is provided, being movable from a retracted position, where it is situated inside a bead-separating member, into a projecting position, where the bead-engaging member is arranged so as to project at least partially from the bead-separating member. The machine according to EP 1,625,954 is very efficient and practical compared to the other known machines. Nevertheless the Applicants have set themselves the aim of improving it.

In particular, the Applicants have set themselves the aim of providing an operating head for a tyre-removal machine which is able to operate in a more efficient manner on tyres which have particularly rigid shoulders such as so-called "run-flat" tyres. The shoulders of this type of tyre are able to support the weight of a vehicle, even when their pressure is very low or practically zero owing to a puncture. The advantage is that a vehicle which is fitted with run-flat tyres is able to continue travelling even with a punctured tyre, albeit for a prescribed and limited number of kilometres.

EP 0 947 360 A2 discloses a machine for removing and mounting tyres from and onto their wheel rim, comprising a platform rotating on a base and provided with self-centering jaws for locking the wheel rim; a vertical column close to said platform and extending from the base; means projectingly supported by said column and movable in the manner of a normal tyre removal tool both radially and vertically relative to the platform, and lockable in position; at least one substantially horizontal arm movable vertically relative to the column and lockable in position; and actuator means arranged to raise and lower said arm. At the end of said horizontal arm there is fixed a plate on which two frustoconical rollers are idly and opposingly mounted, their function being to urge the beads (or side walls) of the tyre into the seats of the wheel rim.

DE 44 15 064 A1 discloses a device for removing a tyre from a wheel rim, having a clamping device for holding and turning a rim of a wheel and having a hook for engaging behind the foot of a tyre and for pulling it off over the flange of the rim. Diametrically opposite the hook there are pressure means which can be moved and pressed laterally against the tyre. This movement takes place in such a way that in a specific position the foot, to be respectively pulled off, of the tyre is held diametrically opposite the hook in the region of the fall drop centre while the tyre is turned by the clamping device.

EP 1 364 814 A2 discloses a tire assembling/disassembling machine, particularly for industrial vehicle wheels, having a support frame delimiting a forehead, a back and two sides, a rigid support framework articulated at the back of the support frame according to an articulation axis, driving means for angularly lifting/lowering said rigid support framework with respect to said support frame, a self-centring assembly overhangingly carried by said rigid support framework at the forehead of said support frame, whereby its axis of rotation is substantially normal to said articulation axis, and bead-releasing means carried by said rigid support framework. The tire assembling/disassembling machine further comprises a pair of side bead-releasing assemblies, supported by said rigid support framework and each located on the opposite side with respect to said self-centring assembly, driving means for each bead releasing assembly designed to move its respective bead-releasing assembly between a rest position and a working position in a substantially normal direction with respect to said articulation axis.

EP 0 987 130 A2 discloses according to the preamble of claim 1 an auxiliary device for tyre removal machines, to enable them to correctly operate on wheels of special type having their wheel rim and tyre of asymmetric shape, comprises a wheel rim support and locking member to be fixed to the tyre removal machine self-centering unit of vertical axis, and comprising a central vertical support shaft rising from a wide connection base, and a thrust member slidable in level, which can assume an inactive configuration in which it lies to the side of said self-centering unit, and an active configuration in which it lies above said unit to occupy a raised working position in which it can act against the underlying upper sidewall of the tyre, and a lowered working position in which it can act against the overlying lower sidewall of the same tyre.

EP 1026 017 A2 discloses a machine for mounting and removing special tires consisting of a floor-mounted turret which supports a unit for coupling and turning wheels provided with the special tires and a device for transversely pushing the beads of the tires, the device being provided with means for adjusting its intervention position.

EP 1 167 089 A2 discloses an apparatus for mounting tyres with antipuncture inserts.

According to one embodiment of the invention it is provided a tyre-removal machine comprising an operating head, according to claim 1.

Preferably, the radially inner body and the radially outer body of the first and the second bead-separating members have an opposite conicity.

Preferably, the radially inner body and the radially outer body of the first and the second bead-separating members have a different axial length, the radially inner body having an axial length smaller than that of the radially outer body.

In a preferred embodiment, the first axis and the second axis are coplanar.

In a preferred embodiment, the first axis and the second axis lie in a plane substantially parallel to a meridian plane of a rim mounted on a wheel-clamping table or the like.

Preferably, the first axis and the second axis converge at a point along the axis of a rim mounted on a wheel-clamping table or the like.

In a preferred embodiment, the first axis and the second axis form an acute angle of between about 30° and about 50°. More preferably, such an acute angle is of about 42°.

The present invention will become entirely clear from the detailed description which follows, provided purely by way of a non-limiting example, to be read with reference to the accompanying plates of illustrative drawings in which:
- Figure 1 is a partially sectioned and schematic side view of a tyre-removal machine according to an embodiment of the present invention;
- Figure 2 is a longitudinally sectioned view of the operating head, the oil-hydraulic thruster piston and the oil-hydraulic piston which moves the bead-engaging member;
- Figure 3 is a longitudinally sectioned view of the operating head and the bead-engaging member completely extended;
- Figure 4 is a view of a plate with grooves for guiding the movement of the bead-engaging member;
- Figure 5 is a plan view of a bead-engaging member;
- Figure 6 is a plan view, from above, which shows the arrangement of the bead-separating members;
- Figure 7 shows how the bead-separating members act on the shoulder of a tyre;
- Figure 8 shows the initial stage of mounting the tyre onto the rim;
- Figure 9 shows a subsequent stage during mounting of the tyre onto the rim;
- Figure 10 shows the initial stage of extracting the tyre from the rim; and
- Figure 11 shows a subsequent stage during extraction of the tyre from the rim.

The figures are schematic representations not necessarily to scale. The same reference numbers have been used in the various figures to indicate the same components or components which are functionally equivalent.

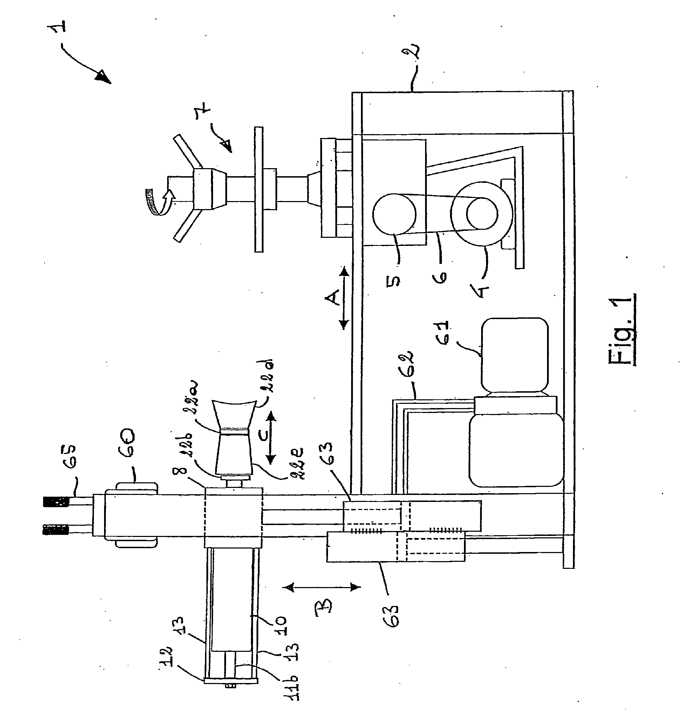

Reference should be made initially to Figure 1 which illustrates overall the tyre-removal machine 1. The tyre-removal machine 1 is fitted with an operating head 20 according to an embodiment of the invention, which carries members for mounting or removing a wheel tyre. In particular, the operating head 20 carries members for separating and engaging with a bead of a tyre.

The tyre-removal machine 1 comprises a box-shaped frame 2 (also called "casing") which houses an electric motor 4, a speed reducer 5 and a belt drive system 6. A shaft of the speed reducer 5, projecting from the casing 2, is able to cause rotation of a wheel-clamping turntable 7 which clamps a wheel to be mounted/removed.

In the present description and in the figures, the wheel-clamping table is horizontal. The present invention is in any case equally well applicable in the case where the table is vertical or otherwise inclined.

The tyre-removal machine 1 according to the invention also comprises a pressurised-fluid circuit. Conveniently, and contrary to the known similar tyre-removal machines, said circuit is a hydraulic circuit. This solution allows high thrusting forces to be obtained and does not require connection to a compressed-air source, but only to an electric power supply network. The hydraulic circuit of the tyre-removal machine 1 comprises an oil-hydraulic unit 60, a hydraulic distributor 61, oil-hydraulic pistons 11, 16, 63, connection pipes 62 and operating means of the lever type 65 or pedal type (not shown).

The casing 2 is substantially in the form of a parallelepiped. The casing 2 is formed with a front side, a rear side, two opposite flanks and a top surface. The sides and the flanks are closed by respective panels. Similarly, the top surface is closed, at least partially, by a panel. The top surface has an opening for allowing the shaft of the motor reducer 5 to project outside. In one embodiment, the wheel-clamping table 7 is displaceable along guides (not shown) as indicated by the double arrow A. In other words, depending on the size of the wheel tyre to be changed, the position of the wheel-clamping table may be fixed with the respect to the casing (or better, with respect to the operating head).

There is a guide column 3 situated along the rear side of the casing 2. A block 8 is movable vertically along the guide column 3, as indicated by the double arrow B. In one embodiment, the block 8 is displaced vertically by means of the oil-hydraulic pistons 63 which are situated opposite each other.

A tube 10 slides through the block 8. The tube 10 is internally machined to within the prescribed tolerance and preferably has a circular cross-section.

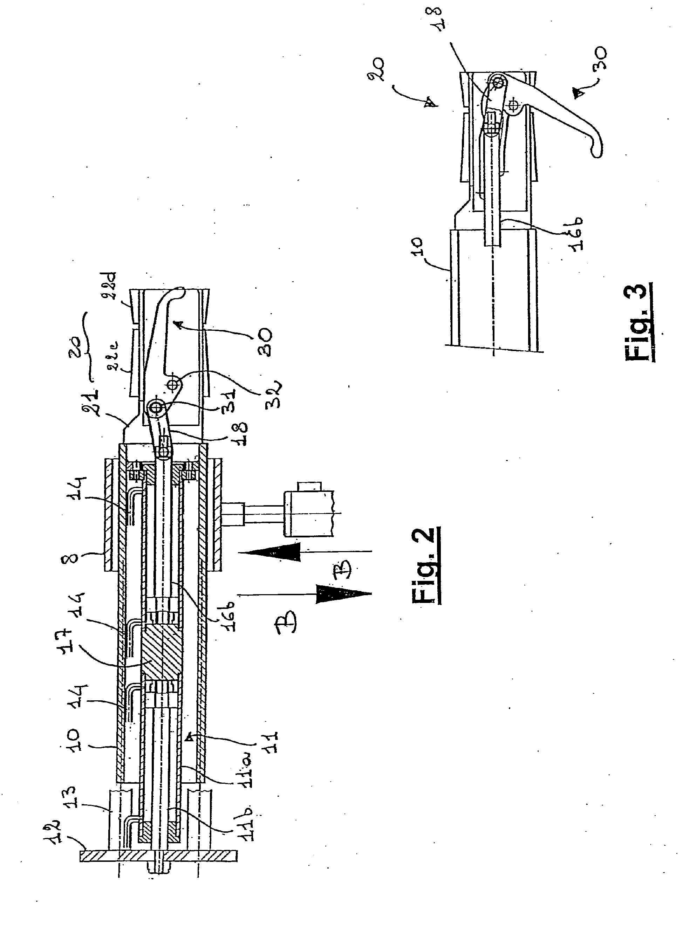

Reference should now be made also to Figure 2. Sliding of the tube 10 is performed by means of a first oil-hydraulic piston 11, i.e. said thruster piston, which is housed inside the tube 10. The first oil-hydraulic piston 11 has a cylinder 11 a and a piston rod 11 b. The end of the piston rod 11 b is fixed to an end plate 12. Sliding spacers 14 allow sliding of the cylinder 11 a inside the tube 10.

The end plate 12 is rigidly constrained to the block 8. In the embodiment shown the end plate 12 and the block 8 are constrained by means of tie-rods 13. Preferably, the tie-rods 13 are four in number and are circumferentially equally spaced around the tube 10. By means of the tie-rods 13, the block 8 and the end plate 12 are substantially rigidly constrained to each other. Obviously, a similar result may also be obtained in a different way, for example by means of an outer tube (not shown) which rigidly connects the end plate 12 to the block 8.

The first oil-hydraulic piston 11 allows the operating head 20 (which will be described in detail hereinbelow) to be displaced horizontally (double arrow C in Figure 1). In other words, by means of the oil-hydraulic piston 11, the operating head 20 is extracted towards the tyre (not shown in Figures 1 and 2) or retracted with respect thereto.

A second oil-hydraulic piston 16 is housed inside the tube 10. The second oil-hydraulic piston 16 comprises a cylinder 16a and a piston rod 16b. The cylinder 16a of the second oil-hydraulic piston 16a is constrained end-to-end (namely opposite) the cylinder 11 a of the first oil-hydraulic piston by means of a connecting member 17. Further sliding spacers 14 allow guided sliding of the cylinder 16a inside the tube 10.

Operation of the second oil-hydraulic piston 16 allows the bead-engaging member 30 to be extracted or retracted inside its housing as will be described more fully further below. Figure 2 shows the bead-engaging member 30 in the completely retracted configuration and Figure 3 shows the bead-engaging member 30 in the extended position.

The extracting or retracting movement of the bead-engaging member 30 as well as of the entire operating head 20 is always gradual and precise and allows the member 30 or the operating head 20 to be stopped in any intermediate position owing to the hydraulic operating system.

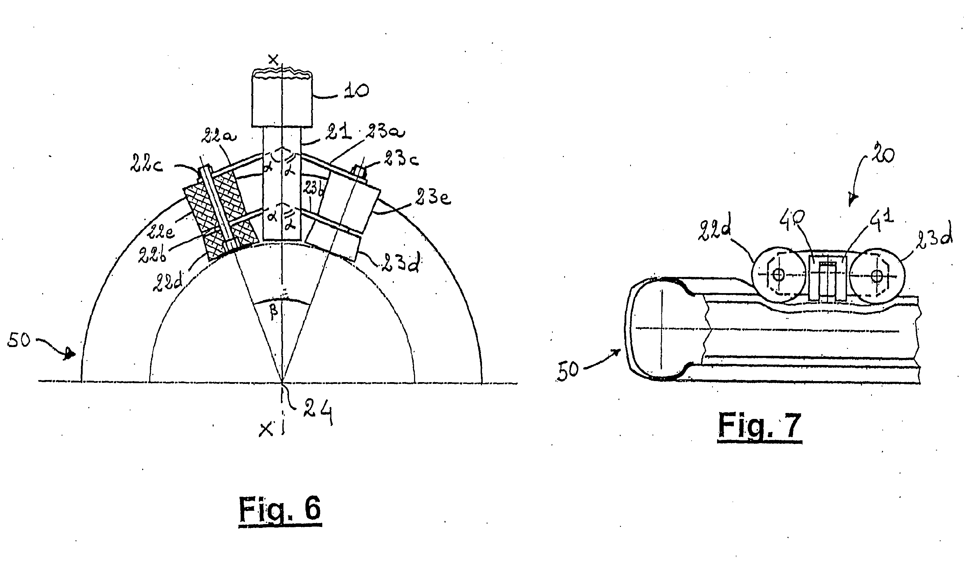

The operating head 20 comprises a head tube 21 (Figure 6) constrained to the tube 10. Preferably the head tube 21 is hollow and has a quadrangular (square or rectangular) cross-section. A first pair of brackets 22a or 22b is rigidly constrained to the head tube 21 on one side thereof. A second pair of brackets 23a, 23b is rigidly constrained to the head tube 21 on the opposite side, as shown in Figure 6.

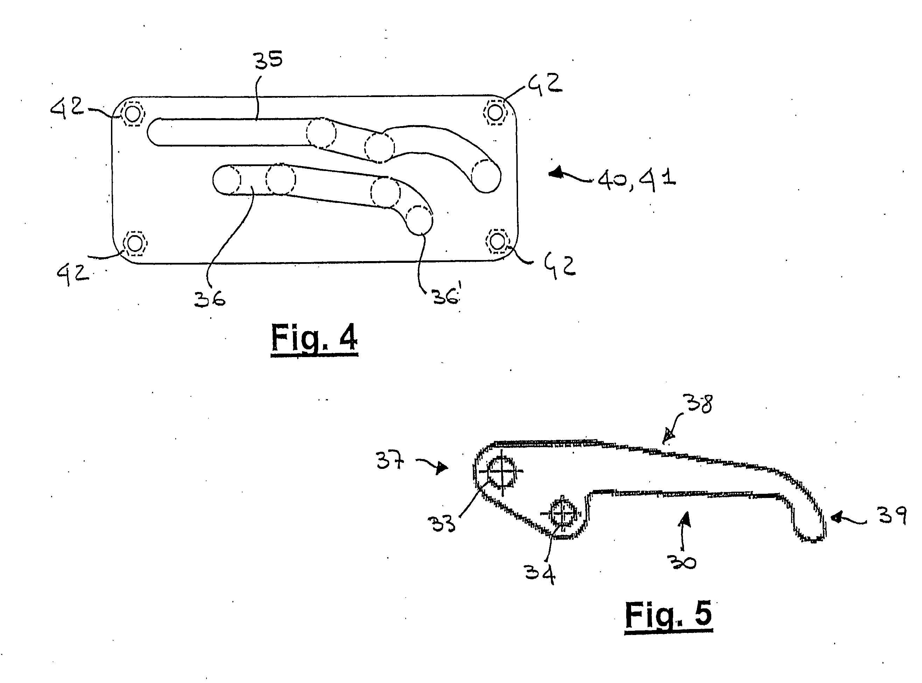

The terminal part of the head tube 21 forms the housing inside which, in the retracted condition, the bead-engaging member 30 is housed. The movement of the bead-engaging member 30 is guided by two pins 31, 32 inserted in respective holes 33, 34 formed in the bead-engaging member 30. The pins 31, 32 are guided inside two respective grooves or cams 35, 36. The grooves 35, 36 are shown in Figure 4. The first pin 31 slides in a guided manner inside the first of said grooves. The second pin 32 slides inside the second groove 36, again shown in Figure 4.

The first pin 31 is connected to the rod end of the second oil-hydraulic piston 16 by means of a connecting rod 18. By causing the piston rod 16b to move outwards, the bead-engaging member 30 first emerges from its housing while remaining substantially horizontal and then starts to point downwards. In particular, when the second pin 32 reaches the end 36' of the second cam 36, the first pin 31 performs a rotation along an arc of a circle with its centre precisely in the centre of the second pin 32.

Similarly, when the piston rod 16b is retracted, starting from the position where the bead-engaging member 30 is completely extracted (Figure 3), the bead-engaging member 30 rotates in an anti-clockwise direction (viewed as in Figure 3) of an arc of a circle about the centre of the second pin 32 which is situated at the end 36' of the second cam 36. A further retracting movement of the plunger rod 16b of the second piston 16 causes straightening of the position of the bead-engaging member 30 which may thus enter easily into its housing.

According to a preferred embodiment, the two cams 35, 36 are formed in a first inner plate 40 (Figure 4) and in a second inner plate 40, 41. In other words, the first and second cams 35, 36 are formed both on the first and on the second inner plate 40, 41. The inner plates 40, 41 are fastened, for example by means of threaded screw-type members, to the inner side faces of the head tube 21. Conveniently, the threaded members 42 (the outline of which is shown in Figure 4) are accessible from the outside of the head tube 21. This facilitates quite considerably disassembly of the plates 40, 41 (and therefore the bead-engaging member 30) for example for the purposes of maintenance or replacement thereof.

The bead-engaging member 30 is shaped substantially as shown schematically in Fig. 5. Basically it has an enlarged part 37 with the two holes 33, 34 for the two pins 31. 32, an elongated part 38 and a rounded and substantially curved end part 39.

As mentioned above, the operating head 20 comprises two pairs of brackets 22a, 22b, 23a, 23b which are constrained and extend from two opposite sides of the head tube 21. The two plates 22a, 22b and 23a, 23b of each pair are parallel with each other, but are inclined at a certain angle α with respect to the axis X-X of the head tube 21. With respect to the head tube 21, the two plates of each pair are inclined at an acute angle α of between about 60° and about 80°, preferably of between about 64° and about 74°. In a preferred embodiment, the angle α of inclination of the brackets with respect to the axis of the head tube is about 69°. In any case, the value of the angle of inclination α depends on the dimensions (i.e. the diameter) of the wheel tyre to be mounted/removed, as will become clear below.

A first shaft 22c is inserted inside respective holes of the plates 22a, 22b of the first pair of plates. A second shaft 23c is instead inserted inside respective holes of the plates 23a, 23b of the second pair of plates. The axis of the first shaft 22c is perpendicular to the plates 22a, 22b of the first pair of plates. Similarly, the axis of the second shaft 23c is perpendicular to the plates 23a, 23b of the second pair of plates. Preferably, the axis of the first shaft 22c and the axis of the second shaft 23c converge at a point 24. The point 24 of convergence of the two axes lies, preferably, on the axis of the wheel tyre to be removed.

A frustoconical bead-separating member is mounted rotatably about each of the two shafts 22c, 23c. Preferably, two frustoconical bead-separating members 22d, 22e and 23d, 23e are envisaged for each of the two shafts 22c, 23c, respectively. A first frustoconical bead-separating member (22d, 23d) is also defined as a radially inner bead-separating member because it is closer to the axis of the wheel 24. A second frustoconical bead-separating member (22e, 23e) is also defined as a radially outer bead-separating member because it is radially further from the axis 24 of the wheel. The radially outer bead-separating member 22e and 23e, as shown in Figure 6, is situated between the two respective plates 22a, 22b and 23a, 23b.

The radially outer bead-separating member and the radially inner bead-separating member have an opposite conicity. In other words, the radially outer bead-separating member has its larger-diameter base further from the centre of the wheel and its smaller-diameter base closer to the centre of the wheel; on the other hand, the radially inner bead-separating member has its smaller-diameter base further from the centre of the wheel and its larger-diameter base closer to the centre of the wheel. This arrangement proves to be very advantageous during the wheel tyre mounting and removal operations for the reasons which will become clear below.

Preferably, the bead-separating members are, at least partially, made of a material which produces a reduced friction when in contact with the rubber of the tyre. This material, advantageously, is nylon with graphite optionally injected inside it.

In one embodiment, the diameter of the larger base of the radially inner bead-separating member 22d, 23d is about 100 mm. The radially inner bead-separating member 22d, 23d is about 45 mm long. The diameter of the larger base of the radially outer bead-separating member 22e, 23e is about 90 mm. The radially outer bead-separating member 22e, 23e is about 85 mm long. Obviously, the bead-separating members may be made with other dimensions without departing from the scope of protection defined by the accompanying claims.

According to a preferred embodiment (shown in Figure 1), the radially inner base (i.e. the base with a larger diameter) of the two radially inner bead-separating members 22d, 23d is concave so as to follow more closely the curvature of the tyre and interfere with it as little as possible.

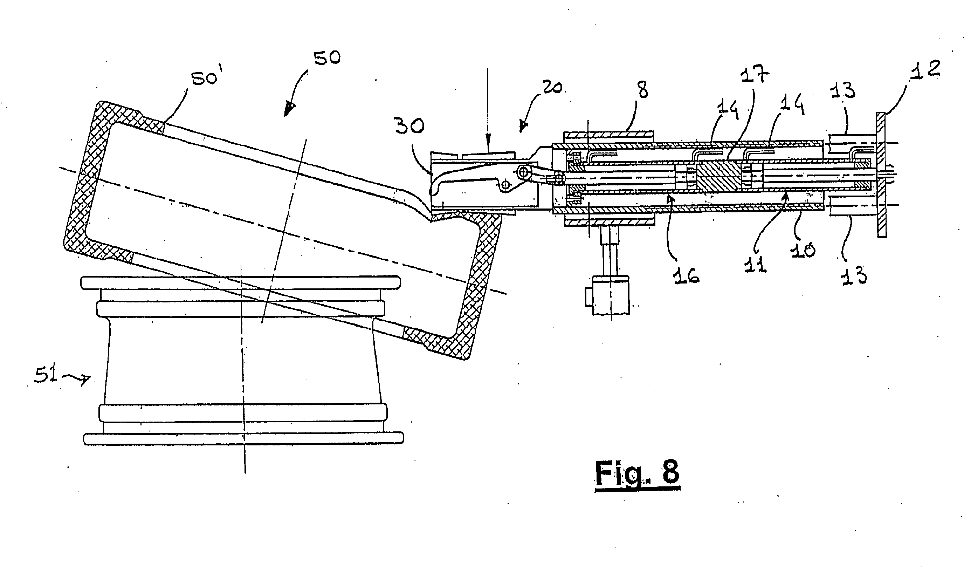

Figure 8 shows the initial stage of mounting of the tyre 50 onto the rim 51. The rim 51 is understood as being mounted on the wheel-clamping table (not shown in Figure 8). The tyre 50 is partially fitted onto the rim 51, keeping it inclined. The operating head 20 is moved towards the tyre 50 by acting on the thruster piston 11. The bead-engaging member 30 is kept retracted inside its housing so that it does not interfere with the tyre 50.

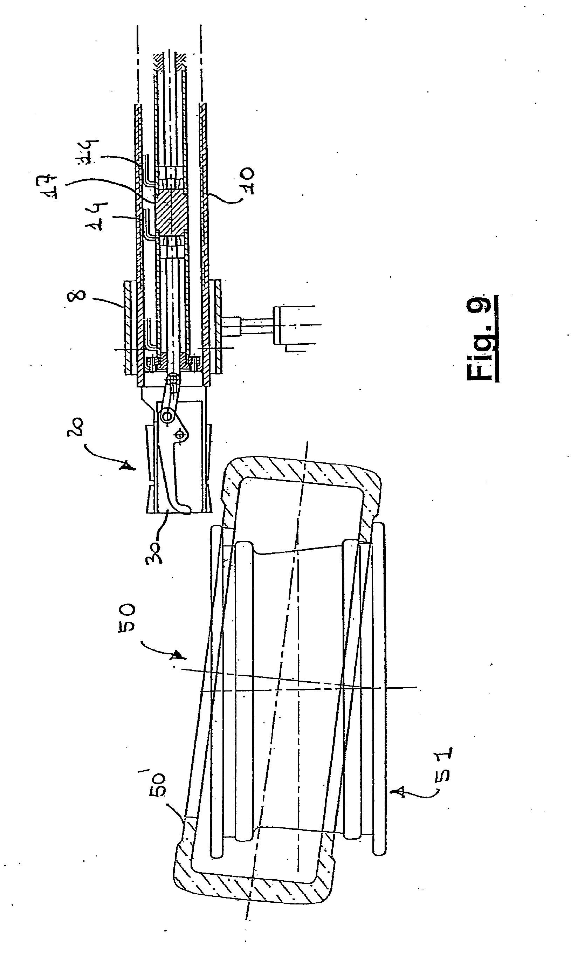

When the operating head 20 is in the correct position, it is pushed downwards as indicated by the vertical arrow. The correct position is that where the radially inner end of the two radially inner bead-separating members 22d, 23d is close to the bead edge 50' of the tyre 50 (as schematically shown in Figure 6). The rim 51 is then rotated by means of the wheel-clamping table and the operating head 20 is gently and gradually lowered. In this way, the first bead 50' passes over the protruding edge of the rim 51 (as shown in Figure 9) and the first part of the operation for mounting the tyre 50 onto the rim 51 is completed.

In order to complete mounting of the tyre 50 onto the rim 51, the operating head 20 is further lowered, starting from the configuration shown in Figure 9.

Advantageously, mounting of the tyre 50 onto the rim 51 is facilitated by locking a special clamp along a point of the protruding edge of the rim 51. In this way it is possible to avoid using a lever or a similar tool.

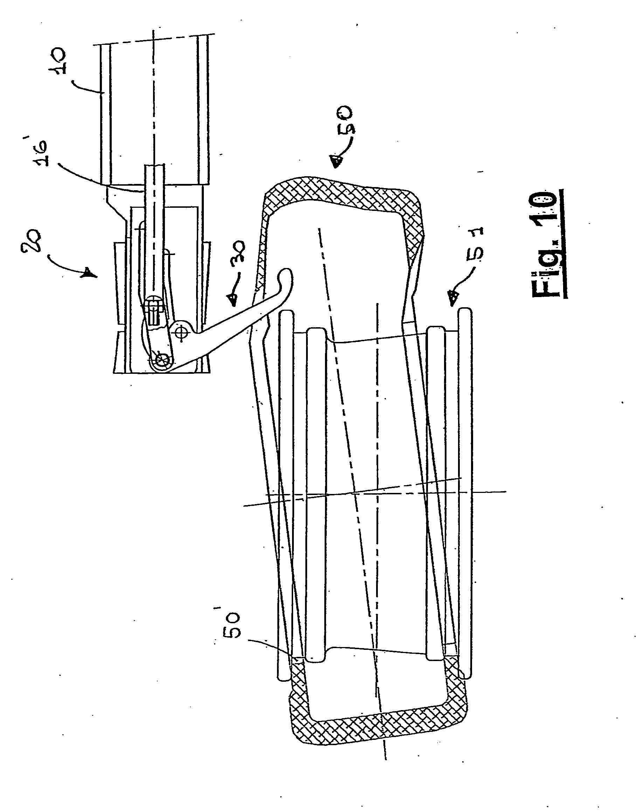

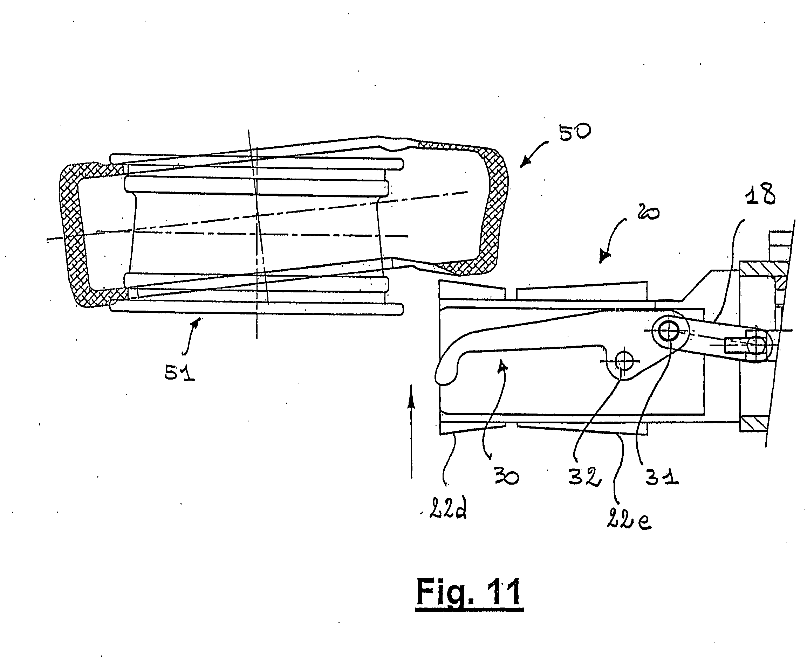

Figures 10 and 11 illustrate the step of removing the tyre 50 from the rim 51. The bead-engaging member 30 is extracted from its housing and brought into the position shown in Fig. 10, where it is completely extracted. Operating with the second oil-hydraulic piston, the first bead 50' of the tyre is engaged. The operating head 20 is raised, while keeping the bead 50' engaged, so that the whole bead 50' passes over the protruding edge of the rim 51.

Once a bead 50' of the tyre has passed over the protruding edge of the rim 51, in order to complete extraction, the tyre 50 is pushed upwards. This operation is performed with the bead-engaging member 30 completely retracted inside its housing.

During the tyre mounting or extracting operations, the conicity of the radially inner bead-separating members 22d, 23d helps pull the tyre radially outwards. This is extremely advantageous.

Moreover, the conicity of the radially outer bead-separating members 22e, 23e and their dimensions assist pushing downwards, but in particular towards the inside of the rim well, so as to be able to push the tyre bead into a smaller diameter. The reverse conicity has precisely the function of helping push with a moderate force the shoulder of the tyre towards the inside of the rim (if said member were cylindrical the tyre would slide off).

The fact of operating with two pairs of bead-separating members (22d, 22e; 23d, 23e) is a very advantageous characteristic feature because a larger area of the shoulder of the tyre 50 is pressed simultaneously, as shown schematically in Figure 7.

Another particularly advantageous characteristic feature is that whereby the axes of the shafts 22c, 23c about which the bead-separating members rotate lie in a horizontal plane or in any case in a plane perpendicular to the axis of the rim. This plane of lie is also referred to as a meridian plane. Moreover, the axes of the shafts 22c, 23c preferably converge at a point which is situated along the axis of the rim.

It is remarked that DE 44 15 064 does not disclose an arrangement similar to the one according to the present invention. In DE 44 15 064 there are provided pressure means which can be moved and pressed laterally against the tyre. Each of said pressure means is made of a single piece having a concave lateral surface. It is understood that each of the pressure means can only oscillate (as shown in Figure 1) around pin 12 but it can not rotate when the wheel is caused to rotate. This is also confirmed by the fact that it is pressed by cylinder arrangement 7 (7'). It seems to be possible only a limited movement as indicated by 27.

According to embodiments of the present invention, two bead separating members are provided. Such two members are arranged at a plane which is parallel to the meridian plane of the tire (typically, substantially horizontal). This two bead separating member arrangement is used both for separating the tire from the rim at one side and also for separating the tire from the rim at the opposite side. On the contrary, DE 44 15 064 shows an arrangement with one bead separating member at one side and one bead separating member at the opposite side.

The single head of the present invention, differently from the arrangement of DE 44 15 064 comprises also a bead engaging member.

The two bead separating member arrangement according to embodiments of the present invention is robust and effective also because, between the two converging bead separating members, a bead-engaging member can be arranged. Again, the two bead separating member arrangement presses the tire at two locations without creating a momentum. As disclosed in the present description and as shown in the attached drawings, the bead-engaging member can be at least partially housed and maintained in/by a head tube. The head tube may be hollow and may have a quadrangular (square or rectangular) cross-section. A first pair of brackets may be rigidly constrained to the head tube on one side thereof. A second pair of brackets may be rigidly constrained to the head tube on the opposite side.

The arrangement according to the present invention wherein each bead separating member comprises two separate frustoconical bodies has proved itself to be robust and effective. In fact, the rotational axis is rigidly fixed at two brackets (for instance 22a and 22b). Therefore, the radially outer frustoconical body is between the two brackets. The radially inner frustoconical body is arranged in a hoverhang fashion (it should be understood that a bracket at the end of the radially inner frustoconical body would interfere with the rim).

Thanks to the shape of the radially outer frustoconical bodies (having a diameter increasing going away from the center of the wheel), the tire is not excessively drawn far away from the rim; only a space which is enough for entering of the bead-engaging member will be provided.

## Claims

1. A tyre-removal machine (1) comprising an operating head (20), said operating head (20) comprising a bead-separating member (22d, 22e; 23d, 23e) for separating a bead of a tyre from a rim and a bead-engaging member (30) for, when the tyre bead has been separated from the rim, engaging the tyre bead,
said bead-separating member (22d, 22e; 23d, 23e) comprises a first bead-separating member (22d, 22e) rotatable about a first axis (22c) and a second bead-separating member (23d, 23e) rotatable about a second axis (23c), wherein the first axis (22c) and second axis (23c) converge at a point (24), **characterized in that**
- said first bead-separating member (22d, 22e) comprises a radially inner frustoconical body (22d) and a radially outer frustoconical body (22e), the two frustoconical bodies (22d, 22e) of the first bead-separating member (22d, 22e) being rotatable in an idle manner and independently one from the other, and
- said second bead-separating member (23d, 23e) comprises a radially inner frustoconical body (23d) and a radially outer frustoconical body (23e), the two bodies (23d, 23e) of the second bead-separating member (23d, 23e) being rotatable in an idle manner and independently one from the other.

2. The tyre-removal machine (1) according to Claim 1, **characterized in that** the radially inner body (22d; 23d) and the radially outer body (22e; 23e) of the first and the second bead-separating members have an opposite conicity.

3. The tyre-removal machine (1) according to any one of Claims 1 to 2, **characterized in that** the radially inner body (22d; 23d) and the radially outer body (22e; 23e) of the first and the second bead-separating members have a different axial length, the radially inner body (22d; 23d) having an axial length smaller than that of the radially outer body (22e; 23e).

4. The tyre-removal machine (1) according to any of the preceding claims, **characterized in that** said first axis and said second axis (22c, 23c) are coplanar.

5. The tyre-removal machine (1) according to any of the preceding claims, **characterized in that** said first axis and said second axis (22c, 23c) lie in a plane substantially parallel to a meridian plane of a rim (51) mounted on a wheel-clamping table or the like.

6. The tyre-removal machine (1) according to any one of the preceding claims, **characterized in that** said first axis and second axis (22c, 23c) converge at a point along the axis of a rim (51) mounted on a wheel-clamping table or the like.

7. The tyre-removal machine (1) according to any one of the preceding claims, **characterized in that** said first axis and said second axis (22c, 23c) form an acute angle of between about 30° and about 50°.

8. The tyre-removal machine (1) according to any one of the preceding claims, **characterized in that** said first axis and said second axis (22c, 23c) form an acute angle (β) of about 42°.

## Patentansprüche

1. Eine Reifenentfernungsmaschine (1) mit einem Betriebskopf (20), wobei der Betriebskopf (20) ein wulst-separierendes Glied (22d, 22e; 23d, 23e) zur Separierung des Wulstes eines Reifens von einer Felge und ein wulstbeaufschlagendes Glied (30) zum Beaufschlagen des Reifenwulstes aufweist, wenn der Reifenwulst von der Felge separiert wurde,
wobei das wulst-separierende Glied (22d, 22e; 23d, 23e) ein erstes, um eine erste Achse (22c) drehbares wulst-separierendes Glied (22d, 22e) und ein zweites, um eine zweite Achse (23c) drehbares wulst-separierendes Glied (23d, 23e) aufweist, wobei die erste Achse (22c) und die zweite Achse (23c) an einem Punkt (24) zusammentreffen,
**dadurch gekennzeichnet,**
- **dass** das erste wulst-separierende Glied (22d, 22e) einen radial inneren kegelstumpfartigen Körper (22d) und einen radial äußeren kegelstumpfartigen Körper (22e) aufweist, wobei die zwei kegelstumpfartigen Körper (22d, 22e) des ersten wulst-separierenden Glieds (22d, 22e) in einer freien Weise und unabhängig voneinander rotierbar sind, und
- **dass** das zweite wulst-separierende Glied (23d, 23e) einen radial inneren kegelstumpfartigen Körper (23d) und einen radial äußeren kegelstumpfartigen Körper (23e) aufweist, wobei die zwei kegelstumpfartigen Körper (23d, 23e) des zweiten wulst-separierenden Glieds (23d, 23e) in einer freien Weise und unabhängig voneinander rotierbar sind.

2. Die Reifenentfernungsmaschine (1) nach Anspruch 1,
**dadurch gekennzeichnet,**
**dass** der radial innere Körper (22d; 23d) und der radial äußere Körper (22e; 23e) des ersten und des zweiten wulst-separierenden Glieds eine entgegengesetzte Konizität haben.

3. Die Reifenentfernungsmaschine (1) nach einem der Ansprüche 1 oder 2,
**dadurch gekennzeichnet,**
**dass** der radial innere Körper (22d; 23d) und der radial äußere Körper (22e; 23e) des ersten und des zweiten wulst-separierenden Glieds eine unterschiedliche axiale Länge haben, wobei der radial innere Körper (22d; 23d) eine kleinere axiale Länge als der radial äußere Körper (22e; 23e) hat.

4. Die Reifenentfernungsmaschine (1) nach einem der vorhergehenden Ansprüche,
**dadurch gekennzeichnet,**
**dass** die erste Achse und die zweite Achse (22c, 23c) koplanar sind.

5. Die Reifenentfernungsmaschine (1) nach einem der vorhergehenden Ansprüche,
**dadurch gekennzeichnet,**
**dass** die erste Achse und die zweite Achse (22c, 23c) in einer Ebene liegen, die im Wesentlichen parallel zu einer Meridianebene einer auf einem Radhaltungstisch oder ähnlichem befestigten Felge (51) ist.

6. Die Reifenentfernungsmaschine (1) nach einem der vorhergehenden Ansprüche,
**dadurch gekennzeichnet,**
**dass** die erste Achse und die zweite Achse (22c, 23c) an einem Punkt entlang der Achse einer auf einem Radhaltungstisch befestigten Felge (51) konvergieren.

7. Die Reifenentfernungsmaschine (1) nach einem der vorhergehenden Ansprüche,
**dadurch gekennzeichnet,**
**dass** die erste Achse und die zweite Achse (22c, 23c) einen spitzen Winkel zwischen ca. 30° und ca. 50° formen.

8. Die Reifenentfernungsmaschine (1) nach einem der vorhergehenden Ansprüche,
**dadurch gekennzeichnet,**
**dass** die erste Achse und die zweite Achse (22c, 23c) einen spitzen Winkel (β) von ca. 42° formen.

## Revendications

1. Démonte-pneu (1) comprenant une tête d'actionnement (20), ladite tête d'actionnement (20) comprenant un organe de séparation de talon (22d, 22e ; 23d, 23e) pour séparer un talon d'un pneu à partir d'une jante et un organe de mise en prise de talon (30) pour mettre en prise le talon de pneu lorsque le talon de pneu a été séparé de la jante, ledit organe de séparation de talon (22d, 22e ; 23d, 23e) comprenant un premier organe de séparation de talon (22d, 22e) rotatif autour d'un premier axe (22c) et un second organe de séparation de talon (23d, 23e) rotatif autour d'un second axe (23c), le premier axe (22c) et le second axe (23c) convergeant en un point (24), **caractérisé en ce que**
- ledit premier organe de séparation de talon (22d, 22e) comprend un corps tronconique radialement interne (22d) et un corps tronconique radialement externe (22e), les deux corps tronconiques (22d, 22e) du premier organe de séparation de talon (22d, 22e) étant rotatifs au ralenti et indépendamment l'un de l'autre, et
- ledit second organe de séparation de talon (23d, 23e) comprend un corps tronconique radialement interne (23d) et un corps tronconique radialement externe (23e), les deux corps tronconiques (23d, 23e) du second organe de séparation de talon (23d, 23e) étant rotatifs au ralenti et indépendamment l'un de l'autre.

2. Démonte-pneu (1) selon la revendication 1, **caractérisé en ce que** le corps radialement interne (22d ; 23d) et le corps radialement externe (22e ; 23e) des premier et second organes de séparation de talon présentent une conicité opposée.

3. Démonte-pneu (1) selon l'une quelconque des revendications 1 et 2, **caractérisé en ce que** le corps radialement interne (22d ; 23d) et le corps radialement externe (22e ; 23e) des premier et second organes de séparation de talon présentent une longueur axiale différente, le corps radialement interne (22d ; 23d) ayant une longueur axiale plus petite que celle du corps radialement externe (22e ; 23e).

4. Démonte-pneu (1) selon l'une quelconque des revendications précédentes, **caractérisé en ce que** ledit premier axe et ledit second axe (22c, 23c) sont coplanaires.

5. Démonte-pneu (1) selon l'une quelconque des revendications précédentes, **caractérisé en ce que** ledit premier axe et ledit second axe (22c, 23c) se trouvent dans un plan sensiblement parallèle à un plan méridien d'une jante (51) montée sur une table de serrage de roue ou similaire.

6. Démonte-pneu (1) selon l'une quelconque des revendications précédentes, **caractérisé en ce que** ledit premier axe et ledit second axe (22c, 23c) convergent en un point sur l'axe d'une jante (51) montée sur une table de serrage de roue ou similaire.

7. Démonte-pneu (1) selon l'une quelconque des revendications précédentes, **caractérisé en ce que** ledit premier axe et ledit second axe (22c, 23c) forment un angle aigu compris entre environ 30° et environ 50°.

8. Démonte-pneu (1) selon l'une quelconque des revendications précédentes, **caractérisé en ce que** ledit premier axe et ledit second axe (22c, 23c) forment un angle aigu (β) d'environ 42°.
